# DEMANDE DE BREVET EUROPEEN

(11) **EP 4 195 116 A1**
(43) Date de publication de la demande: **14.06.2023**
(21) Numéro de dépôt: 21306734.1
(22) Date de dépôt: 09.12.2021
(51) Int. Cl.: G06Q 10/00

(54) **TECHNOLOGIE DE POTENTIALISATION DU CAPITAL HUMAIN D'UNE ORGANISATION PAR LE CAPITAL SANTE DE SES MEMBRES**

(71) Demandeur: Ballerio, Philippe, 98000 Monaco (MC); Binois-Lombardo, Anne-Charlotte, 1022 Chavannes près Renens (CH); Couturier, Pierre-Yves, 75016 Paris (FR); Daigne, Michel, 84210 Saint Didier (FR); Lasserre, Gilles, 75015 Paris (FR); Mezzadri, Ange, 75019 Paris (FR); Nguyen Duy Mat, Christian, 94170 Le Pereux sur Marne (FR)
(72) Inventeur: BALLERIO, Philippe, 98000 Monaco (MC); BINOIS-LOMBARDO, Anne-Charlotte, 1022 Chavannes près Renens (CH); COUTURIER, Pierre-Yves, 75016 Paris (FR); DAIGNE, Michel, 84210 Saint Didier (FR); LASSERRE, Gilles, 75015 Paris (FR); MEZZADRI, Ange, 75019 Paris (FR); NGUYEN DUY MAT, Christian, 94170 Le Pereux sur Marne (FR)
(74) Mandataire: Icosa

(57) **Abrégé**

La présente invention concerne un système de traitement d'information pour la mise en place d'actions de prévention des risques et de protection du capital humain d'une organisation ou du capital santé de ses membres, dirigeants et/ou collaborateurs de cette organisation.

## Description

### DOMAINE DE L'INVENTION

La présente invention concerne un système de traitement d'information permettant de générer des informations pour mettre en place des actions optimisant le fonctionnement d'une organisation. En particulier, l'invention s'appuie sur la caractérisation du capital humain de l'organisation et du capital santé des membres de l'organisation.

### ÉTAT DE LA TECHNIQUE

La santé et la qualité de vie au travail sont un enjeu collectif, mais surtout un enjeu global pour l'efficience des organisations. En effet, le fonctionnement d'une organisation résulte à la fois des caractéristiques de chaque membre de l'organisation et des caractéristiques de l'organisation en elle-même, dans ses dimensions de management des ressources humaines, d'organisation du travail et de prévention des risques professionnels par exemple. La prise en compte de l'ensemble de ces caractéristiques est particulièrement complexe.

Par l'utilisation des techniques numériques des mobiles multifonctions, des systèmes informatiques professionnels et d'entreprise, de l'internet des objets et des plateformes web, des algorithmes d'intelligence artificielle et l'informatique en nuage, il est possible de combiner les informations des différents agents - la personne physique, l'équipe médicale qui l'accompagne, l'équipe de management des ressources humaines et l'équipe d'ingénierie de la qualité, l'hygiène, la sécurité et l'environnement de l'organisation que dirige et/ou à laquelle collabore la personne - pour en dégager des axes d'amélioration à l'échelle de la personne ou de l'organisation. En particulier, les concepts de capital santé et de capital humain permettent de mesurer sur des échelles objectives les caractéristiques de tous les agents et de générer des informations utiles pour mettre en place des actions préventives, protectrices ou correctives au niveau de chacun des agents du système.

Par exemple, la caractérisation de la personne dans ce système s'appuie sur le capital santé. La conception du capital santé d'une personne dans ses quatre dimensions physique, mentale, sociale et économique complète la définition classique de la santé comme état de complet bien-être physique, mental et social (OMS).

Pour l'organisation, la caractérisation peut se faire par le capital humain avec ses trois dimensions en rapport avec le capital santé des membres de l'organisation, les compétences professionnelles (hard skills en anglais), les capacités relationnelles (soft skills en anglais) et ce qui est propre à chaque membre de l'organisation, la qualité de ses pratiques (mad skills en anglais).

De nombreuses approches existent, mais sont limitées dans la prise en compte des caractéristiques de l'ensemble des agents. Par exemple, pour la prévention des risques professionnels dans les entreprises, les outils comme un Document Unique d'Evaluation des Risques Professionnels (DUERP) sont inadaptés à l'extension du champ d'action et de responsabilité des préventeurs pour inclure le capital santé des personnes. Dans le cas de la lutte contre la désinsertion professionnelle, les outils des Direction des Ressources Humaines ne sont pas en capacité d'intégrer tous les déterminants de la situation de chaque personne collaborant à une entreprise, et tenant à sa vulnérabilité en lien avec sa santé, son handicap, son employabilité et dorénavant sa résilience à des chocs comme par exemple une pandémie. Pour la promotion de la qualité de vie au travail en lien avec la santé au travail, une concertation de haut niveau entre un médecin praticien correspondant avec le médecin traitant, un médecin conseil et un médecin du travail est nécessaire, tout en préservant le secret médical. Enfin, les preuves de la potentialisation du capital humain d'une organisation par le capital santé de ses membres sont dorénavant suffisamment solides. Mais il n'existe pas à ce jour d'outils numériques adaptés à ces besoins.

La présente invention vise à résoudre ces problèmes en mettant en œuvre un système de traitement d'information regroupant l'ensemble des caractéristiques des agents impliqués, pour évaluer les risques sur le capital humain d'une organisation en lien avec le capital santé de ces membres et mettre en place des actions.

### RÉSUMÉ

L'invention concerne donc un système de traitement d'information comprenant :
- des moyens de stockage configurés pour stocker
   o une base de données comprenant le capital santé d'une population de membres d'une organisation ;
   o une base de donnée comprenant le capital humain de cette organisation ;
- des unités d'acquisition configurées pour acquérir les informations définissant le capital santé des membres de l'organisation et des instruments de mesure des grandeurs caractéristiques du capital santé ;
- des unités d'acquisition configurées pour acquérir les informations définissant le capital humain de cette organisation et des instruments de mesure des grandeurs caractéristiques du capital humain;
- une unité de calcul configurée pour calculer un risque pour le capital humain de l'organisation en rapport avec le capital santé de ses membres et/ou un risque pour le capital santé de ses membres ;
- une unité de génération configurée pour générer des informations pour mettre en place des actions de prévention des risques et/ou des actions de protection
   o du capital humain de l'organisation ; et/ou
   o du capital santé des membres de l'organisation.

Dans un mode de réalisation, les unités d'acquisition configurées pour acquérir les informations définissant le capital santé des membres de l'organisation sont choisies parmi les applications et logiciels installées sur un mobile multifonctions et une plateforme web. En particulier, les instruments de mesure des grandeurs caractéristiques du capital santé sont choisis parmi des objets connectés au mobile multifonctions et/ou à la plateforme web. Plus précisément, l'unité de génération génère des informations pour mettre en place des actions d'amélioration du capital santé des membres de l'organisation choisies parmi les actions d'amélioration de ses quatre composantes physique, mentale, sociale et économique.

Dans un mode de réalisation, les unités d'acquisition configurées pour acquérir les informations définissant le capital humain de cette organisation sont choisis parmi les applications et logiciels installées sur un mobile multifonctions, une plateforme web et un système d'information de l'organisation. En particulier, les instruments de mesure des grandeurs caractéristiques du capital humain de cette organisation sont choisis parmi des objets connectés au mobile multifonctions et/ou à une plateforme web et/ou à un système d'information de l'organisation. Plus précisément, l'unité de génération génère des informations pour mettre en place des actions d'amélioration du capital humain de l'organisation choisies parmi les actions d'amélioration de ses quatre composantes : le capital santé de ses membres, leurs compétences professionnelles, leurs capacités relationnelles et la qualité de leurs pratiques.

Dans un mode de réalisation, l'évaluation du capital santé d'un membre de l'organisation donne lieu à des recommandations adressées à ce membre et/ou à cette organisation dont la personne est membre. En particulier, le capital santé du membre de l'organisation est ré-évalué après la mise en œuvre des recommandations.

Dans un mode de réalisation, le calcul du risque du capital santé du membre de l'organisation est effectué avec des dispositifs spécifiques à une catégorie de risque dont les indications sont réunies sur un tableau de bord.

Dans un mode de réalisation, l'évaluation du capital humain de l'organisation donne lieu à des recommandations adressées à un membre de l'organisation et/ou à l'organisation. En particulier, le capital humain de l'organisation est ré-évalué après la mise en œuvre des recommandations.

Dans un mode de réalisation, le calcul du risque du capital humain de l'organisation est effectué avec des dispositifs spécifiques à une catégorie de risque dont les indications sont réunies sur un tableau de bord.

Dans un mode de réalisation, l'unité de génération génère des informations pour mettre en place des actions de prévention des risques et/ou de protection du capital santé des membres de l'organisation choisies parmi leurs activités physiques et mentales, l'hygiène de leur milieu de vie et leur alimentation.

Dans un mode de réalisation, l'unité de génération génère des informations pour mettre en place des actions de prévention des risques et/ou de protection du capital humain de l'organisation choisies parmi les actions concernant les accidents du travail et maladies professionnelles, la qualité de vie au travail, les flux de présence au travail et la responsabilité sociétale

L'invention concerne aussi une méthode de traitement d'information comprenant :
- L'acquisition d'informations définissant le capital santé des membres d'une l'organisation ;
- L'acquisition d'informations définissant le capital humain de cette organisation ;
- Le stockage desdites informations dans des moyens de stockage ;
- Le calcul d'un risque pour le capital humain de l'organisation et/ou d'un risque pour le capital santé de ses membres ; et
- La génération d'informations pour mettre en place des actions de prévention des risques et/ou des actions de protection
   o du capital humain de l'organisation ; et/ou
   o du capital santé des membres de l'organisation.

### DÉFINITIONS

Dans la présente invention, les termes ci-dessous sont définis de la manière suivante :

**"Capital santé",** en référence à une personne, concerne les caractéristiques physiques et mentales ; sociales ; et économiques qui concourent à son bien-être. La santé est définie par l'OMS comme « un état de complet bien-être physique, mental et social et ne consiste pas seulement en une absence de maladie ou d'infirmité ». Le Capital Santé comporte une quatrième dimension, économique, lorsqu'il est mis en relation avec le métier ou les métier(s) exercé(s) par la personne. Cet ensemble de caractéristiques du patrimoine santé de la personne représente un capital santé qu'elle expose au risque au cours de sa vie personnelle et professionnelle. Les risques auxquels le Capital Santé d'une personne est exposé peuvent se répartir en : risques médicaux (troubles musculosquelettiques, maladies infectieuses et transmissibles, cancers, pathologies visuelles et auditives, etc.) ; risques psychosociaux (stress, burn-out, etc.) ; risques d'accidents de travail (chutes de plain-pied et de hauteur, etc.) ; et risques routiers lors de déplacements personnels et professionnels.

**"Capital humain",** en référence à une organisation, concerne les caractéristiques de la qualification des membres de l'organisation en santé et sécurité au travail qui peut faire l'objet d'un passeport de prévention; des compétences professionnelles, du savoir- faire et des diplômes des membres de l'organisation (« hard skills » en anglais) ; du savoir être et de la qualité des pratiques professionnelles des membres de l'organisation (« mad skills » en anglais) ; des capacités relationnelles et des activités extra-professionnelles des membres de l'organisation (« soft skills » en anglais). Cet ensemble de caractéristiques du patrimoine humain de l'organisation représente un capital humain qu'elle expose au risque pour son bon fonctionnement,

**"Exposition au risque du Capital Santé"** concerne la variable qui permet de mesurer et de classer les risques auxquels le Capital Santé d'une Personne est exposé. L'exposition à des risques personnels s'évalue avec des données personnelles de santé en rapport avec ces données cliniques et susceptibles de faire varier dans un sens ou un autre cette exposition clinique. L'exposition au risque de la composante physique du capital santé s'évalue avec des données physiopathologiques et anatomiques. Ces données s'organisent à l'échelle cellulaire et tissulaire et à l'échelle des structures anatomiques et des fonctions physiologiques d'un organisme humain. L'exposition au risque de la composante mentale du capital santé s'évalue avec des données de bien-être psychique, émotionnel et cognitif ou de troubles mentaux. L'exposition au risque de la composante sociale du capital santé s'évalue avec des données sur la situation de handicap de la personne. On distingue cinq catégories de handicaps (handicaps psychique, mental, moteur, sensoriel et maladies invalidantes) accentués ou non selon le(les) métiers exercés. L'exposition au risque de la composante économique du capital santé s'évalue avec des données sur le(s) métier(s) exercé(s) et leurs conditions d'exercice. L'exposition au risque du capital santé se mesure tout au long du parcours de santé avec des dispositifs médicaux numériques spécifiques à une catégorie de risques : troubles musculo-squelettiques, maladies infectieuses et transmissibles, risques psycho-sociaux, agents chimiques dangereux, etc.

**"Exposition au risque du Capital humain"** d'une organisation concerne l'exposition au risque du capital santé de ses membres - dirigeants et/ou collaborateurs - avec des indicateurs clés de performance (KPI en anglais) : un indicateur clé de performance concernant les accidents du travail et les maladies professionnelles ; la conciliation de la performance globale de l'organisation et de l'amélioration des conditions de travail de ses membres avec un indicateur clé de performance sur la qualité de vie au travail ; les flux de présence au travail avec un tableau d'indicateurs clés de performance sur l'absentéisme, le turn-over, etc. ; un indicateur clé de performance concernant la responsabilité sociétale de l'organisation.

**"Médecin conseil"** : le médecin conseil est soumis en principe à l'agrément de « spécialiste en médecine d'assurance et expertise médicale ». Il donne un avis dans le cadre de la mission que lui confie l'organisme d'assurances protégeant le capital santé de la personne des risques auxquels il est exposé.

**"Médecin du travail"** : le médecin du travail conduit les actions de santé au travail pour préserver la santé des personnes dirigeant et/ou collaborant à une ou plusieurs organisations tout au long de leur parcours professionnel. Il surveille leur état de santé en fonction de leur âge, des risques concernant leur sécurité, leur santé et la pénibilité au travail. Il conseille les dirigeants et/ou les collaborateurs et/ou leurs représentants sur les mesures nécessaires portant sur les points suivants : risques professionnels, amélioration des conditions de travail, prévention de la consommation d'alcool et de drogue sur le lieu de travail, prévention du harcèlement moral ou sexuel, pénibilité au travail et désinsertion professionnelle, maintien dans l'emploi des travailleurs.

**"Médecin praticien"** : le médecin praticien coopère avec le médecin traitant coordonnant le parcours de soins, un médecin conseil et un médecin du travail lors des cycles de prévention des risques et protection du capital santé. Son champ de pratique ressort en France de l'Accord National Interprofessionnel sur la santé au travail signé en décembre 2020 par les Partenaires Sociaux. Il est idéalement un médecin interniste généraliste et/ou un médecin ayant des compétences relatives à une exposition au risque spécifique du capital santé : troubles musculo-squelettiques, maladies infectieuses et transmissibles, risques psycho-sociaux, agents chimiques dangereux, etc.

**Direction des ressources humaines"** concerne la structure d'une organisation qui assure la gestion du personnel - partie administrative (la gestion des paies, les congés payés, les notes de frais, etc.), intermédiaire entre dirigeants et collaborateurs (promotion en interne, revalorisation de salaire, changement dans le contrat de travail, etc.), médiateur interculturel entre différents collaborateurs ; le recrutement - politique de recrutement dont les entretiens d'embauche et l'analyse des CV, des lettres de motivation et des relations humaines ; et la formation - sélection des formations pertinentes pour l'organisation.

**"Ingénierie de la qualité, hygiène, sécurité et environnement",** en référence à une organisation, concerne la prévention des différents risques professionnels et le respect des normes qualité, hygiène, sécurité et environnement. Pour la qualité : amélioration continue de la satisfaction client et des parties prenantes, de l'organisation, de la conformité du travail, des produits et services. Pour l'hygiène : veille à la conformité aux normes applicables en matière d'hygiène. Pour la sécurité : réduction voire suppression des maladies et des accidents professionnels. Pour l'environnement : maîtrise des impacts environnementaux des produits et services et respect des réglementations en la matière.

**"Comité Social et Économique"** concerne en France une instance unique de représentation du personnel composée de l'employeur et d'une délégation élue du personnel comportant un nombre de membres fixé en fonction de l'effectif de l'entreprise. Le Comité Social et Economique comporte une commission santé, sécurité et conditions de travail.

"**Membre**" concerne une personne physique faisant partie d'une organisation. Les membres peuvent être des entrepreneurs - personnes agissant en toute indépendance et qui sont responsables de leurs actes, sans être placés sous la subordination juridique d'une autre personne - et/ou des dirigeants entrepreneurs ou non et/ou des collaborateurs - personne qui collabore à une organisation comme une entreprise, et qui met son capital santé en œuvre en collaborant à cette organisation sur un segment de son parcours professionnel et avec le(les) métier(s) qu'elle exerce seule ou en équipe. Dans cette demande, le terme de « membre » peut être remplacé par « personne ».

"**Organisation**" concerne un groupe social formé d'individus en interaction, ayant un but collectif et dans laquelle sont regroupé ses membres. Une organisation peut être une entreprise, dont les membres sont les personnes qui travaillent avec cette entreprise dans le cadre ou non d'un contrat : dirigeants entrepreneurs ou non, salariés, consultants, mandataires et représentants. Une organisation peut être une association, dont les membres sont les personnes qui agissent dans cette association. Une organisation peut être un établissement public dont les membres ont un statut de fonctionnaire ou une collectivité territoriale, dont les membres sont les personnes qui s'identifient à un territoire. De manière générale, l'organisation regroupe un ensemble de membres qui partagent une des caractéristiques de l'organisation.

### DESCRIPTION DÉTAILLÉE

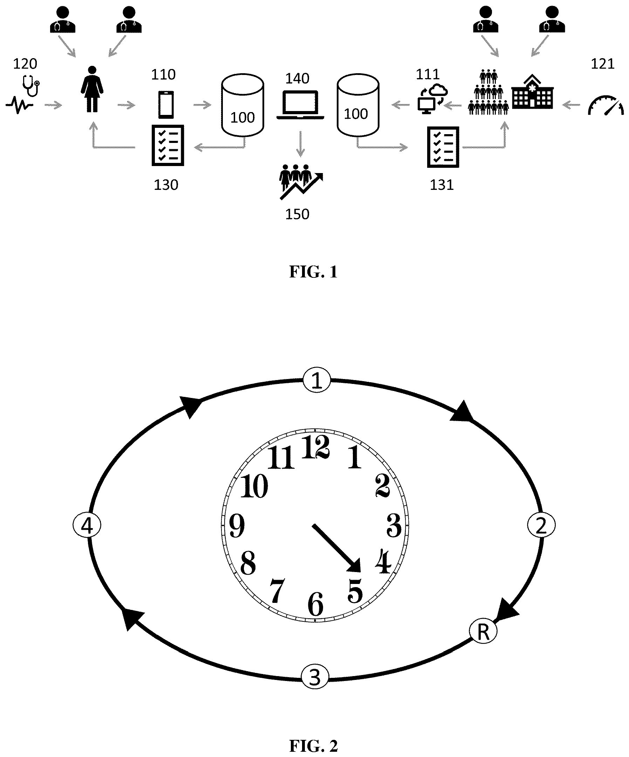

La présente invention concerne un système de traitement d'information. La figure 1 illustre ce système.

Le système de traitement d'information comprend des moyens de stockage 100 configurés pour stocker des bases de données relatives aux membres d'une organisation d'une part et à l'organisation d'autre part. La base de données relatives aux membres de l'organisation comprend le capital santé de chacun des membres de l'organisation. La base de données relatives à l'organisation comprend le capital humain de l'organisation.

Dans l'invention, le terme « traitement d'information » comprend les mécanismes de collecte de données, en particulier de mesures de données, ainsi que les méthodes conduisant à utiliser et/ou transformer ces données pour en extraire des informations, des indicateurs et/ou des recommandations.

Le système de traitement d'information comprend en outre deux types d'unités d'acquisitions (110, 111) et des instruments de mesure associés (120, 121).

Le premier type d'unités d'acquisitions 110 est configuré pour acquérir les informations définissant le capital santé d'une personne, membre d'une organisation. Les informations sont mesurées par des instruments de mesure 120, en particulier par un dispositif médical connecté. L'utilisation d'un tel outil de mesure 120 permet de déterminer des paramètres contribuant à l'évaluation du capital santé de la personne. L'outil de mesure 120 peut être connecté directement à l'unité d'acquisition 110. Alternativement, la personne peut renseigner sur l'unité d'acquisition la mesure 110 faite avec l'outil de mesure 120.

L'unité d'acquisition 110 est typiquement un terminal connecté sur lequel une application est mise en œuvre afin de collecter les mesures faites par l'outil de mesure 120 et éventuellement les informations renseignées par la personne.

L'outil de mesure 120 permet de mesurer un paramètre pertinent pour l'évaluation de la santé de la personne. Ce paramètre peut être le résultat d'une mesure instantanée. De préférence, ce paramètre est le suivi dans le temps d'une mesure. Les outils de mesures suivants sont particulièrement adaptés : une balance pour mesurer la masse et/ou la répartition de masse de la personne, un cardiofréquencemètre, un oxymètre, un dispositif de mesure de l'apnée du sommeil tel qu'un polysomnographe, un tensiomètre, un thermomètre, un glucomètre, un électrocardiographe, une aide auditive, etc. Ces mesures peuvent être réalisées avec des capteurs, des bracelets, des montres, des vêtements, des mobiliers, etc., associés ou non à des applications relatives, à l'alimentation, l'activité physique, le sommeil, etc.

Le capital santé peut aussi contenir des informations relatives à la personne et mesurées par un médecin praticien correspondant du médecin traitant de la personne, un médecin du travail en rapport avec l'organisation dont est membre la personne et un médecin conseil qui intègre le risque à l'échelle d'un grand nombre de personnes et d'organisations. Les contributions de ces trois médecins - contributions distinguées et respectant le secret médical- sont alors intégrées par le dispositif d'acquisition 110. Le fait de cumuler les observations des trois médecins agissant sur des périmètres différents en se concertant, apporte au capital santé de la personne une meilleure précision. Ces contributions peuvent être faite soit en présence de la personne, soit avec des outils de télémédecine comme des logiciels de téléconsultation.

La figure 2 illustre un mécanisme par lequel le capital santé de la personne peut être ré-évalué, voire amélioré. Le capital santé d'une personne est actualisé pendant la période 1 sur l'horloge de la figure 2 : profil de la personne, mesures régulières... Débute alors une période 2 de réalisation d'actes médicaux. De 2h à 4h, la personne rencontre successivement son médecin praticien, puis son médecin conseil, enfin son médecin du travail. A l'issue de ces consultations, une recommandation R est émise par les médecins. Cette recommandation peut s'adresser à la personne et/ou à l'organisation dont la personne est membre. Pendant la période 3, la personne met en œuvre la recommandation et poursuit l'acquisition des paramètres pertinents pour l'évaluation de sa santé à l'aide de l'outil de mesure 120 et transmets ces données à l'unité d'acquisition 110. Pendant la période 4, la personne rencontre de nouveaux ses trois médecins, ce qui permet d'évaluer l'efficacité de l'observance de la recommandation et les résultats sur la santé de la personne. Enfin, le capital santé de la personne est réactualisé dans la durée 1. La représentation sur une horloge dans la figure 2 est symbolique, les durées des périodes peuvent être très différentes. En particulier, la période 3 peut durer de quelques jours à quelques semaines, voire quelques mois. Les deux consultations médicales des périodes 2 et 4 auprès d'un médecin peuvent aussi être regroupées en une consultation, tant que les deux aspects de recommandation d'une part et d'évaluation des résultats d'autre part sont considérés pendant la consultation.

Le capital santé de la personne peut être visualisé sur un tableau de bord 130. Ce tableau de bord 130 peut être adapté selon s'il est consulté par la personne elle-même ou par l'un de ses médecins, de telle sorte à respecter le secret médical.

Ainsi, une personne effectue une succession d'actes comportant chacun une acquisition d'informations, des mesures de grandeurs et une génération d'actions. Elle accomplit chacun de ses actes avec des médecins tout au long d'un parcours de prévention des risques et de protection de son capital santé. Cette personne s'oriente tout au long de ce parcours, avec un tableau de bord comportant quatre indicateurs : l'exposition au risque de son capital physique qui se décompose en entités anatomiques et physiopathologiques, de son capital mental, de son capital social et de son capital économique, d'où ressort l'exposition au risque de son capital santé comme résultante des quatre expositions précédentes. Les risques auxquels est exposé le capital santé de la personne peuvent être des risques médicaux (troubles musculo-squelettiques, maladies infectieuses et transmissibles, agents chimiques dangereux, etc.), des risques psycho-sociaux, des risques d'accidents domestiques, des risques d'accident du travail et des risques routiers mesurés avec des dispositifs spécifiques tout au long du parcours de santé.

Le second type d'unités d'acquisitions 111 est configuré pour acquérir les informations définissant le capital humain d'une organisation. Les informations sont mesurées par des instruments de mesure 121. L'utilisation d'un tel outil de mesure 121 permet de déterminer des paramètres contribuant à l'évaluation du capital humain de l'organisation. L'outil de mesure 121 peut être connecté directement à l'unité d'acquisition 111. Alternativement, un membre de l'organisation peut renseigner sur l'unité d'acquisition 111 la mesure faite avec l'outil de mesure 121.

L'unité d'acquisition 111 est typiquement un terminal connecté sur lequel une application est mise en œuvre afin de collecter les mesures faites par l'outil de mesure 121 et éventuellement les informations renseignées.

L'outil de mesure 121 permet de mesurer un paramètre pertinent pour l'évaluation du capital humain de l'organisation. Ce paramètre peut être le résultat d'une mesure instantanée. De préférence, ce paramètre est le suivi dans le temps d'une mesure. Les outils de mesures suivants sont particulièrement adaptés : tableau de bord de l'exposition au risque du capital santé des membres de l'organisation, passeports de prévention et dispositifs de certification périodique des parcours professionnels des collaborateurs de l'organisation, label de responsabilité sociétale de l'organisation, tableau d'indicateurs de la présence au travail.

Les paramètres pertinents pour l'évaluation du capital humain de l'organisation peuvent aussi être émis par des équipes de management des ressources humaines - équipe interne à l'organisation et/ou externe - et/ou par des équipes d'ingénierie de la qualité, hygiène, sécurité et environnement - équipe interne à l'organisation et/ou externe et/ou par l'équipe du comité social et économique et/ou un autre organisme représentant les membres de l'organisation - équipe interne à l'organisation et/ou externe. Ces contributions peuvent être faite avec des outils traditionnels ou des outils de numérisation de l'espace-temps de travail (digital workplace en anglais). Les contributions de ces différentes équipes sont alors intégrées par le dispositif d'acquisition 111. Ces contributions peuvent être des indicateurs du fonctionnement de l'organisation tels que les indicateurs du document unique d'évaluation des risques professionnels, les indicateurs de ressources humaines sociodémographiques, prévisionnels, de performance, liés au recrutement et liés à la formation, les indicateurs de risques d'image, juridiques et financiers en responsabilité sociétale. Le fait de cumuler ces observations avec les mesures de l'outil de mesure 121 permet d'enrichir la description du capital humain de l'organisation. En premier il s'agit d'exprimer la potentialisation du capital humain de l'organisation par le capital santé de ses membres.

Le capital humain de l'organisation peut être visualisé sur un tableau de bord 131. Ce tableau de bord 131 peut être adapté en fonction de l'entité qui le consulte, de telle sorte à respecter le secret médical, les données personnelles et/ou les données confidentielles de l'organisation.

Ainsi, une organisation peut conduire une succession d'actes comportant chacun une acquisition d'informations, des mesures de grandeurs et une génération d'actions. Elle accomplit chacun de ses actes avec des médecins, des managers et des ingénieurs tout au long du parcours de prévention des risques et de protection de son capital humain. Cette organisation s'oriente tout au long de ce parcours, avec un tableau de bord comportant quatre indicateurs clés de performance : l'exposition au risque du capital santé des personnes entreprenant et/ou collaborant à cette organisation, la qualité de vie au travail, les flux de présence au travail et la responsabilité sociétale, d'où ressort l'exposition au risque de son capital humain comme résultante des quatre expositions précédentes. Les risques auxquels est exposé le capital humain de l'organisation peuvent être des risques sanitaires et/ou sociaux et/ou économiques et/ou politiques et/ou écologiques.

En outre, le système de traitement d'information comprend une unité de calcul 140. En s'appuyant sur les données contenues dans les bases de données de capital santé et/ou de capital humain, l'unité de calcul 140 calcule un risque pour le capital humain de l'organisation. Le calcul du risque peut s'appuyer sur des méthodes d'intelligence artificielle. L'exposition au risque du capital humain de l'organisation peut être calculé avec des données du capital santé des membres de l'organisation et des données de la qualité de vie au travail, des flux de présence au travail et de responsabilité sociétale

Enfin, le système de traitement d'information comprend une unité de génération 150. Cette unité de génération 150 génère des informations permettant la mise en place d'actions de prévention des risques et/ou des actions de protection. Pour cela, les actions visent à la prévention des risques et/ou à la protection du capital humain de l'organisation et/ou du capital santé des membres de l'organisation.

Par exemple, les actions de prévention des risques et de protection du capital santé peuvent être : la prévention et la protection relatives à l'exposition à des risques cliniques comportent des actions physiopathologiques et anatomiques concernant les immunisations (vaccins, ...), les traitements préventifs et les dépistages et sont associées à des conseils ; la prévention et la protection relatives à l'exposition à des risques personnels comportent des actions d'hygiène de vie concernant les activités physiques et mentales, l'alimentation et le milieu de vie, et sont associés à des conseils ; ou la prévention et la protection relatives à l'exposition à des risques professionnels comportent des actions concernant les conditions de travail, l'aménagement des postes de travail et le maintien dans l'emploi, et sont associés à des conseils.

Par exemple, les actions de prévention des risques et de protection du capital humain peuvent être : des actions visant à potentialiser le capital humain de l'organisation par le capital santé de ses collaborateurs à travers un passeport de prévention spécifique à une catégorie d'unité de travail présentant une certaine homogénéité de risques et en lien avec les trois autres dimensions de ce capital humain : les compétences, la qualité des pratiques et la capacité relationnelle de ses collaborateurs; et/ou des actions visant à réduire les risques d'image, financiers et juridiques dans le cadre de la responsabilité sociétale de l'organisation ; .

L'invention concerne également une méthode de traitement d'information comprenant :
- L'acquisition d'informations définissant le capital santé des membres d'une organisation ;
- L'acquisition d'informations définissant le capital humain de cette organisation ;
- Le stockage desdites informations dans des moyens de stockage ;
- Le calcul d'un risque pour le capital humain de l'organisation en rapport avec le capital santé de ses membres et/ou d'un risque pour le capital santé de ses membres ; et
- La génération d'informations pour mettre en place des actions de prévention des risques et/ou des actions de protection
   o du capital humain de l'organisation ; et/ou
   o du capital santé des membres de l'organisation.

### BRÈVE DESCRIPTION DES FIGURES

**Figure 1** est un schéma représentant une réalisation du système d'information de l'invention.
**Figure 2** est un schéma représentant le mécanisme de réévaluation et éventuellement d'amélioration du capital santé d'une personne.

### EXEMPLES

La présente invention se comprendra mieux à la lecture du premier exemple suivant qui illustre non-limitativement l'invention, dans le cadre des troubles musculo- squelettiques (TMS ci-après). Les TMS des membres supérieurs et inférieurs sont des troubles de l'appareil locomoteur pour lesquels l'activité professionnelle peut jouer un rôle dans la genèse, le maintien ou l'aggravation. Ils s'expriment par de la douleur mais aussi par de la raideur, de la maladresse ou une perte de force. Quelle que soit leur localisation, les TMS peuvent devenir irréversibles et entraîner un handicap durable. A ce titre, les TMS constituent un enjeu important pour les organisations et leurs membres : ils sont la première cause de maladie professionnelle en Europe et les pertes de capital humain des organisations dont elles sont la cause sont bien documentées.

Dans un premier temps, une étape d'amorçage est réalisée, afin de créer des bases de données.

Pour la base de données comprenant le capital santé d'une population de membres d'une organisation, chaque membre de l'organisation est invité à saisir ses informations personnelles via une unité d'acquisition 110. Ces informations comprennent des données administratives (identification, médecin traitant, ...) et des indications sur ses TMS. Chaque semaine, la personne indique les douleurs articulaires ressenties et les gênes fonctionnelles rencontrées. Ces indications sont recueillies par un questionnaire et par des mesures - réalisées par les instruments de mesure 120 - par exemple objectives de flexion des articulations, à l'aide d'un smartphone dont on mesure l'orientation en préconisant des mouvements à réaliser. Chaque mois, la personne actualise les informations sur son poids, des paramètres anatomiques et physiopathologiques et sur son état de santé général. Ces indications sont recueillies par un questionnaire et par des mesures réalisées par des appareils connectés, comme une balance connectée (mesure du poids, de la répartition de la masse graisseuse et musculaire) ou un appareil de monitoring (tension artérielle, oxymétrie, fréquence cardiaque, etc.). Enfin, chaque année, la personne indique quelles activités professionnelles elle a exercé, sur la base d'un questionnaire. Enfin, de manière continue, la personne donne des indications sur son alimentation, ses activités et son milieu de vie. Ces indications sont recueillies si possible avec des appareils connectés : podomètre intégré à un smartphone, une application mobile scannant l'alimentation, des mesures de température et/ou hygrométrie - soit par mesure directe, soit par géolocalisation et consultation des bases de données météorologiques, etc.

Pour la base de données comprenant le capital humain de l'organisation, la direction des ressources humaines établit la liste des membres de l'organisation. Chacun de ces membres est mis en relation avec un médecin du travail de l'organisation et un médecin conseil de l'organisme d'assurance de l'organisation, organisme avec lequel l'organisation et la personne ont contractualisé pour protéger respectivement leur capital humain et leur capital santé. Chaque mois, les informations définissant le capital humain de l'organisation et qui peuvent être mis en rapport avec des TMS sont actualisées via les unités d'acquisition 111: passeport de prévention de chaque collaborateur de l'organisation, absentéisme des collaborateurs en lien avec leurs arrêts de travail induits par leur TMS ou autres impacts sur la présence au travail, impacts sur la qualité de vie au travail et sur la responsabilité sociétale de l'organisation.

De plus, la direction de l'ingénierie de la qualité, hygiène, sécurité et environnement actualise chaque mois les informations du document unique de prévention des risques professionnels qui peuvent être mis en rapport avec des TMS selon les métiers exercés par chaque collaborateur et ses conditions d'exercice sur des postes de travail occupés en présence et/ou à distance au sein d'unités de travail présentant une exposition aux TMS homogène (efforts physiques importants, gestes répétitifs, postures extrêmes, sédentarité importante, vibrations, secousses et chocs). Ces informations sont recueillies par des questionnaires ou mesurées directement par des instruments de mesures 121 :
caractérisation des efforts par des ergomètres, vibrations et bruits par des capteurs acoustiques, sédentarité par des mesures de déplacement associées à la géolocalisation ou à la détection de mouvement. Ces instruments de mesure peuvent être associés aux personnes (smartphone pour la sédentarité), à leurs équipements de protection (casques anti-bruit pour les sons, semelles connectées pour les mesures de vibration) ou aux postes de travail.

Une unité de calcul 140 calcule alors l'exposition spécifique aux TMS - le baromètre TMS 130 - selon trois classes de risque pour le capital santé d'un membre de l'organisation. Les mesures hebdomadaires de douleurs articulaires et de gênes fonctionnelles permettent d'évaluer une exposition au risque clinique. Cette évaluation est mise à jour chaque semaine. Mensuellement, on quantifie la pression exercée par l'exposition au risque personnel sur l'exposition au risque clinique : cela permet de prendre en compte l'état de santé général. Ainsi, la valeur de l'IMC de la personne supérieure à 25, l'existence de certaines caractéristiques physiopathologiques (antécédents d'hypertension artérielle et de maladies cardiovasculaires, prise de médicaments au long court, etc.), le sexe et l'âge permettent d'ajuster le risque clinique réel de la personne. Enfin, les informations sur l'activité professionnelle - risque professionnel - permettent aussi d'ajuster le risque clinique réel de la personne. Par exemple, si une personne change de poste pour être moins exposée à des manipulations de charges, on s'attend à ce que son risque clinique diminue. Si ce n'est pas le cas, cela signifie que d'autres facteurs n'ont pas été pris en compte.

La même unité de calcul 140 calcule aussi les risques spécifiques aux TMS - le tableau de bord TMS 131 - selon trois classes de risques pour le capital humain de l'organisation. Sur la base de l'ensemble des baromètres TMS des membres de l'organisation, l'exposition au risque de TMS sur le capital santé est évaluée. De plus, l'exposition au risque des performances de l'organisation est évaluée en calculant les gains et/ou pertes résultant de la potentialisation du capital humain de l'organisation par le capital santé, relatives à la qualité de vie au travail, aux flux de présence au travail et à la responsabilité sociétale de l'organisation.

En fonction de ces expositions au risque, une unité 150 génère des informations pour mettre en place des actions de prévention des risques et/ou des actions de protection du capital santé d'une personne en particulier. Ces actions peuvent être des traitements curatifs et/ou préventifs (médicaments contre la douleur comme des antalgiques ou des anti-inflammatoires, immobilisation avec une orthèse, corticoïdes, kinésithérapies, chirurgies, etc.) ou des dépistages des TMS, de préférence mises en place par le médecin traitant. Ces actions peuvent concerner l'hygiène de vie de la personne concernant les activités physiques et mentales, l'alimentation et le milieu de vie prévenant les TMS, et de préférence sont mises en place par le médecin praticien en correspondance avec le médecin traitant et en concertation avec le médecin conseil et le médecin du travail.

De plus, la même unité 150 génère des informations pour mettre en place des actions de prévention des risques et/ou des actions de protection du capital humain de l'organisation en rapport avec l'exposition au risque de TMS du capital santé de ses membres. Ces actions peuvent être de préférence mises en place par la direction des ressources humaines, l'ingénierie de la qualité, hygiène, sécurité et environnement et les représentants des membres de l'organisation constituant ou non un comité social et économique. Ces actions peuvent concerner les conditions de travail, l'aménagement des postes de travail et le maintien dans l'emploi, en recherchant les conditions présentant des TMS minimum et en prévoyant des mesures de prévention individuelles contre les douleurs articulaires ressenties et les gênes fonctionnelles rencontrées, et des mesures collectives comme des actions de formation à différents niveaux de responsabilité dans l'organisation (employés, cadres et dirigeants) et tout au long des parcours professionnels. Ces actions peuvent viser la qualité de vie au travail en améliorant les conditions de travail de manière à réduire les TMS sans affaiblir les performances de l'organisation. Ces actions peuvent viser la réduction de l'absentéisme ou du turn-over corrélés aux TMS.

Ces actions peuvent viser à développer la responsabilité sociétale de l'organisation en prévenant et en se protégeant de risques d'image, financiers et juridiques corrélés à l'exposition aux risques de TMS du capital santé de ses membres.

Enfin, ces actions peuvent être des actions de prévention des TMS et/ou de protection du capital santé et du capital humain d'un grand nombre de personnes membres d'un ensemble d'organisations. Ces actions peuvent concerner une branche professionnelle ou un ensemble de branches professionnelles comme celles de la Construction, de l'Agroalimentaire, de la Santé, des Services Financiers, du Conseil et du Numérique, etc. Ces actions sont mises en place préférentiellement avec des organismes d'assurance mutualisant les risques entre ces personnes et organisations dans le cadre des conventions collectives régissant ces branches professionnelles.

La présente invention se comprendra aussi à la lecture du deuxième exemple suivant qui illustre non-limitativement l'invention, dans le cadre des maladies infectieuses et transmissibles (MIT ci-après). Les MIT sont par exemple les maladies à coronavirus allant du rhume aux pneumopathies sévères comme celles de la covid 19, la grippe, la gastro-entérite, etc. pour lesquels l'activité professionnelle peut jouer un rôle dans la genèse, le maintien ou l'aggravation et qui peuvent avoir des conséquences importantes sur le fonctionnement des organisations.

Elles s'expriment par de la fièvre, de la toux, de la fatigue, des pertes de goût ou d'odorat, des maux de gorge et/ou de tête, des courbatures, de la diarrhée, des éruptions cutanées, des yeux rouges, voir des difficultés à respirer, des pertes d'élocution ou de motricité, des états confusionnels, etc. Les MIT s'accompagnent de réactions de l'organisme infecté qui conduit soit à une immunité acquise, soit dans les cas les plus graves au décès. On connait aussi des formes longues comme probablement avec la covid 19. A ce titre, les MIT constituent un enjeu important pour les organisations et leurs membres à la fois lorsqu'elles prennent la forme de pandémies comme celle de la covid 19, ou une forme récurrente comme celle des épidémies de grippe annuelles. Les pertes de capital humain des organisations sont de mieux en mieux documentés et peuvent être considérables.

Dans un premier temps, une étape d'amorçage est réalisée, afin de créer des bases de données.

Pour la base de données comprenant le capital santé d'une population de membres d'une organisation, chaque membre de l'organisation est invité à saisir ses informations personnelles via une unité d'acquisition 110. Ces informations comprennent des données administratives (identification, médecin traitant, ...) et des données sur ses MIT. Chaque semaine, la personne actualise ses données concernant ses symptômes de MIT, les résultats des tests et les vaccinations qu'elle a effectué. Ces indications sont recueillies par un questionnaire et par des mesures - réalisées par les instruments de mesure 120 - objectives à l'aide d'un smartphone. Chaque mois, la personne actualise les informations sur son poids, ses comorbidités et sur son état de santé général. Ces informations sont recueillies par un questionnaire et par des mesures réalisées par des appareils connectés. Enfin, chaque année, la personne indique quelles activités professionnelles elle a exercé, sur la base d'un questionnaire. Enfin, de manière continue, la personne donne des indications sur son alimentation, ses activités et son milieu de vie. Ces indications sont si possible recueillies par des appareils connectés.

Pour la base de données comprenant le capital humain de l'organisation, la direction des ressources humaines établit la liste des membres de l'organisation. Chacun de ces membres est mis en relation avec un médecin du travail de l'organisation et un médecin conseil de l'organisme d'assurance de l'organisation, organisme avec lequel l'organisation et la personne ont contractualisé pour protéger respectivement leur capital humain et leur capital santé. Chaque mois, les informations définissant le capital humain de l'organisation et qui peuvent être mis en rapport avec des MIT sont actualisées via les unités d'acquisition 111: passeport de prévention de chaque collaborateur de l'organisation, absentéisme des collaborateurs en lien avec les arrêts de travail induits par leur MIT ou autres impacts sur la présence au travail, impacts sur la qualité de vie au travail et sur la responsabilité sociale de l'organisation.

De plus, la direction de l'ingénierie de la qualité, hygiène, sécurité et environnement actualise chaque mois les informations du document unique de prévention des risques professionnels qui peuvent être mis en rapport avec des MIT selon les métiers exercés par chaque collaborateur et ses conditions d'exercice sur des postes de travail occupés en présence et/ou à distance au sein d'unités de travail présentant une exposition aux MIT homogène. Ces informations sont recueillies par des questionnaires ou mesurées directement par des instruments de mesures 121. Ces instruments de mesure peuvent être associés aux personnes (smartphone), à leurs équipements de protection ou aux postes de travail.

Une unité de calcul 140 calcule alors les risques spécifiques aux MIT- le baromètre MIT 130 - selon trois classes de risque pour le capital santé d'un membre de l'organisation. Les mesures hebdomadaires de situation infectieuse et statut immunologique permettent d'évaluer une exposition au risque clinique. Cette évaluation est mise à jour chaque semaine. Mensuellement, on quantifie la pression exercée par l'exposition au risque personnel sur l'exposition au risque clinique : cela permet de prendre en compte l'état de santé général. Ainsi, la valeur de l'IMC de la personne supérieure à 25, l'existence de comorbidités (pathologies respiratoires chroniques, pathologies cardiovasculaires, diabète, immunodépression, cancers, troubles psychiatriques, malades dialysés, transplantés, etc.) et l'âge permettent d'ajuster le risque clinique réel de la personne. Enfin, les informations sur l'activité professionnelle - risque professionnel - permettent aussi d'ajuster le risque clinique réel de la personne. Par exemple, si une personne change de poste pour être moins exposée à la transmission d'une infection entre elle et un public, on s'attend à ce que son risque clinique diminue. Si ce n'est pas le cas, cela signifie que d'autres facteurs n'ont pas été pris en compte.

La même unité de calcul 140 calcule aussi les risques spécifiques aux MIT- le tableau de bord MIT 131 - selon trois classes de risques pour le capital humain de l'organisation. Sur la base de l'ensemble des baromètres MIT des membres de l'organisation, l'exposition au risque de MIT sur le capital santé est évaluée. De plus, l'exposition au risque des performances de l'organisation est évaluée en calculant les gains et/ou pertes résultant de la potentialisation du capital humain de l'organisation par le capital santé, relatives à la qualité de vie au travail, aux flux de présence au travail et à la responsabilité sociétale de l'organisation.

En fonction de ces expositions au risque, une unité 150 génère des informations pour mettre en place des actions de prévention des risques et/ou des actions de protection du capital santé d'une personne en particulier. Ces actions peuvent être des traitements curatifs et/ou préventifs (médicaments, vaccins, etc.) ou des dépistages des MIT, de préférence mises en place par le médecin traitant. Ces actions peuvent concerner l'hygiène de vie de la personne concernant les activités physiques et mentales personnelles et/ou professionnelles, l'alimentation et le milieu de vie prévenant les MIT, et de préférence sont mises en place par le médecin praticien correspondant avec le médecin traitant et en concertation avec le médecin conseil et le médecin du travail.

De plus, la même unité 150 génère des informations pour mettre en place des actions de prévention des risques et/ou des actions de protection du capital humain de l'organisation en rapport avec l'exposition au risque de MIT du capital santé de ses membres. Ces actions peuvent être de préférence mises en place par la direction des ressources humaines, l'ingénierie de la qualité, hygiène, sécurité et environnement et les représentants des membres de l'organisation constituant ou non un comité social et économique. Ces actions peuvent concerner les conditions de travail, l'aménagement des postes de travail et le maintien dans l'emploi, en recherchant les conditions présentant des risques d'infection et/ou de transmission minimum et en prévoyant des équipements de protection individuelle (masques, etc.) et des mesures collectives comme des actions de formation à différents niveaux de responsabilité dans l'organisation (employés, cadres et dirigeants) et tout au long des parcours professionnels. Ces actions peuvent viser la qualité de vie au travail en améliorant les conditions de travail de manière à réduire le risque de MIT sans affaiblir les performances de l'organisation. Ces actions peuvent viser la réduction de l'absentéisme ou du turn-over corrélés aux MIT. Ces actions peuvent viser à développer la responsabilité sociétale de l'organisation en prévenant et en se protégeant de risques d'image, financiers et juridiques corrélés à l'exposition aux risques de MIT du capital santé de ses membres.

Enfin, ces actions peuvent être des actions de prévention des risques de MIT et/ou de protection du capital santé et du capital humain d'un grand nombre de personnes membres d'un ensemble d'organisations. Ces actions peuvent concerner une branche professionnelle ou un ensemble de branches professionnelles comme celles de la Construction, de l'Agroalimentaire, de la Santé, des Services Financiers, de Conseil et du Numérique, des Industries, etc. Ces actions sont mises en place préférentiellement avec des organismes d'assurance mutualisant les risques entre ces personnes et organisations dans le cadre des conventions collectives régissant ces branches professionnelles.

La présente invention se comprendra enfin à la lecture du troisième exemple suivant qui illustre non-limitativement l'invention, dans le cadre des risques psycho-sociaux (RPS ci-après). Les RPS peuvent avoir des conséquences sur la santé, notamment en termes de maladies cardio-vasculaires, de troubles musculo-squelettiques, de troubles anxio-dépressifs, d'épuisement professionnel, voire de suicide. L'activité professionnelle peut jouer un rôle dans leur genèse, leur maintien ou leur aggravation et ils peuvent avoir des conséquences importantes sur le fonctionnement des organisations (absentéisme, turnover, ambiance de travail, etc.).

Ils s'expriment par des troubles de la concentration, du sommeil, de l'irritabilité, de la nervosité, de la fatigue importante, des palpitations, etc. Les RPS constituent un enjeu important pour les organisations et leurs membres à la fois lorsqu'ils prennent une forme brutale et massive en lien par exemple avec une pandémie comme celle de la covid 19 et les mesures sanitaires, économiques et sociales prises en conséquence, ou une forme chronique et diffuse sous l'effet d'un stress permanent des situations de travail ou une forme aigue sous l'effet de violences localisées dans l'espace et le temps. Les pertes de capital humain des organisations induites par les RPS sont de mieux en mieux documentées et peuvent être considérables.

Dans un premier temps, une étape d'amorçage est réalisée, afin de créer des bases de données.

Pour la base de données comprenant le capital santé d'une population de membres d'une organisation, chaque membre de l'organisation est invité à saisir ses informations personnelles via une unité d'acquisition 110. Ces informations comprennent des données administratives (identification, médecin traitant, ...) et des indications sur ses RPS. Chaque semaine, la personne actualise ses données avec des questionnaires de RPS couvrant les situations où sont présents, combinés ou non :
- du stress : déséquilibre entre la perception qu'une personne a des contraintes de son environnement personnel et professionnel et la perception qu'elle a de ses propres ressources pour y faire face ;
- des violences avec ses proches, au sein de l'organisation et dans l'espace public : harcèlement moral ou sexuel, conflits exacerbés entre des personnes ou entre des équipes, insultes, menaces, agressions ;

Ces indications sont recueillies par un questionnaire et par des mesures - réalisées par les instruments de mesure 120 - objectives à l'aide d'un smartphone. Chaque mois, la personne actualise les informations sur ses maladies cardio-vasculaires, ses troubles musculo-squelettiques, ses troubles anxio-dépressifs, etc. et sur son état de santé général. Ces informations sont recueillies par un questionnaire et par des mesures réalisées par des appareils connectés. Enfin, chaque année, la personne indique quelles activités professionnelles elle a exercé, sur la base d'un questionnaire. Enfin, de manière continue, la personne donne des indications sur son alimentation, ses activités et son milieu de vie. Ces indications sont si possible recueillies par des appareils connectés.

Pour la base de données comprenant le capital humain de l'organisation, la direction des ressources humaines établit la liste des membres de l'organisation. Chacun de ces membres est mis en relation avec un médecin du travail de l'organisation et un médecin conseil de l'organisme d'assurance de l'organisation, organisme avec lequel l'organisation et la personne ont contractualisé pour protéger respectivement leur capital humain et leur capital santé. Chaque mois, les informations définissant le capital humain de l'organisation et qui peuvent être mis en rapport avec des RPS sont actualisées via les unités d'acquisition 111: passeport de prévention de chaque collaborateur de l'organisation, absentéisme des collaborateurs en lien avec les arrêts de travail induits par leur RPS ou autres impacts sur la présence au travail, impacts sur la qualité de vie au travail et sur la responsabilité sociétale de l'organisation.

De plus, la direction de l'ingénierie de la qualité, hygiène, sécurité et environnement actualise chaque mois les informations du document unique de prévention des risques professionnels qui peuvent être mis en rapport avec des RPS selon les métiers exercés par chaque collaborateur et ses conditions d'exercice sur des postes de travail occupés en présence et/ou à distance au sein d'unités de travail présentant une exposition aux RPS homogène. Ces informations sont recueillies par des questionnaires ou mesurées directement par des instruments de mesures 121. Ces instruments de mesure peuvent être associés aux personnes (smartphone), à leurs équipements de protection ou aux postes de travail.

Une unité de calcul 140 calcule alors l'exposition spécifique aux RPS - le baromètre RPS 130 - selon trois classes de risque pour le capital santé d'un membre de l'organisation. Les mesures hebdomadaires de la situation de stress et de l'accumulation de violences permettent d'évaluer une exposition au risque clinique. Cette évaluation est mise à jour chaque semaine. Mensuellement, on quantifie la pression exercée par l'exposition au risque personnel sur l'exposition au risque clinique : cela permet de prendre en compte l'état de santé général. Enfin, les informations sur l'activité professionnelle - risque professionnel - permettent aussi d'ajuster le risque clinique réel de la personne : surcharge de travail, manque de clarté dans le partage des tâches, modes de management, etc. Par exemple, si une personne change de poste pour être moins exposée au stress des rapports avec un public et à des violences possibles, on s'attend à ce que son risque clinique diminue. Si ce n'est pas le cas, cela signifie que d'autres facteurs n'ont pas été pris en compte.

La même unité de calcul 140 calcule aussi l'exposition spécifique aux RPS - le tableau de bord RPS 131 - selon trois classes de risques pour le capital humain de l'organisation. Sur la base de l'ensemble des baromètres des membres de l'organisation, l'exposition au risque de RPS sur le capital santé est évaluée. De plus, l'exposition au risque des performances de l'organisation est évaluée en calculant les gains et/ou pertes résultant de la potentialisation du capital humain de l'organisation par le capital santé, relatives à la qualité de vie au travail, aux flux de présence au travail et à la responsabilité sociétale de l'organisation.

En fonction de ces expositions au risque, une unité 150 génère des informations pour mettre en place des actions de prévention des risques et/ou des actions de protection du capital santé d'une personne en particulier. Ces actions peuvent être des traitements curatifs et/ou préventifs (médicaments, psychothérapies, etc.) ou des dépistages des RPS, de préférence mises en place par le médecin traitant. Ces actions peuvent concerner l'hygiène de vie de la personne concernant les activités physiques et mentales personnelles et/ou professionnelles, l'alimentation et le milieu de vie prévenant les RPS, et de préférence sont mises en place par le médecin praticien correspondant avec le médecin traitant et en concertation avec le médecin conseil et le médecin du travail.

De plus, la même unité 150 génère des informations pour mettre en place des actions de prévention des risques et/ou des actions de protection du capital humain de l'organisation en rapport avec l'exposition aux RPS du capital santé de ses membres. Ces actions peuvent être de préférence mises en place par la direction des ressources humaines, l'ingénierie de la qualité, hygiène, sécurité et environnement et les représentants des membres de l'organisation constituant ou non un comité social et économique. Ces actions peuvent concerner les conditions de travail, l'aménagement des postes de travail et le maintien dans l'emploi, en recherchant les conditions présentant des RPS minimum et en prévoyant des mesures de prévention individuelles contre le stress et les violences et des mesures collectives comme des actions de formation à différents niveaux de responsabilité dans l'organisation (employés, cadres et dirigeants) et tout au long des parcours professionnels. Ces actions peuvent viser la qualité de vie au travail en améliorant les conditions de travail de manière à réduire les RPS sans affaiblir les performances de l'organisation. Ces actions peuvent viser la réduction de l'absentéisme ou du turn-over corrélés aux RPS. Ces actions peuvent viser à développer la responsabilité sociétale de l'organisation en prévenant et en se protégeant de risques d'image, financiers et juridiques corrélés à l'exposition aux RPS du capital santé de ses membres.

Enfin, ces actions peuvent être des actions de prévention des RPS et/ou de protection du capital santé et du capital humain d'un grand nombre de personnes membres d'un ensemble d'organisations. Ces actions peuvent concerner une branche professionnelle ou un ensemble de branches professionnelles comme celles de la Construction, de l'Agroalimentaire, de la Santé, des Services Financiers, du Conseil et du Numérique, etc. Ces actions sont mises en place préférentiellement avec des organismes d'assurance mutualisant les risques entre ces personnes et organisations dans le cadre des conventions collectives régissant ces branches professionnelles.

## Revendications

1. Système de traitement d'information comprenant :
• des moyens de stockage (100) configurés pour stocker
o une base de données comprenant le capital santé d'une population de membres d'une organisation ;
o une base de donnée comprenant le capital humain de cette organisation ;
• des unités d'acquisition (110) configurées pour acquérir les informations définissant le capital santé des membres de l'organisation et des instruments de mesure (120) des grandeurs caractéristiques du capital santé ;
• des unités d'acquisition (111) configurées pour acquérir les informations définissant le capital humain de cette organisation et des instruments de mesure (121) des grandeurs caractéristiques du capital humain ;
• une unité de calcul (140) configurée pour calculer un risque pour le capital humain de l'organisation en rapport avec le capital santé de ses membres et/ou un risque pour le capital santé de ses membres ;
• une unité de génération (150) configurée pour générer des informations pour mettre en place des actions de prévention des risques et/ou des actions de protection
o du capital humain de l'organisation ; et/ou
o du capital santé des membres de l'organisation.

2. Système de traitement d'information selon la revendication 1, dans lequel les unités d'acquisition (110) configurées pour acquérir les informations définissant le capital santé des membres de l'organisation sont choisies parmi les applications et logiciels installées sur un mobile multifonctions et une plateforme web.

3. Système de traitement d'information selon la revendication **2**, dans lequel les instruments de mesure (120) des grandeurs caractéristiques du capital santé sont choisis parmi des objets connectés au mobile multifonctions et/ou à la plateforme web.

4. Système de traitement d'information selon l'une quelconque des revendications **1** à **3**, dans lequel les unités d'acquisition (111) configurées pour acquérir les informations définissant le capital humain de cette organisation sont choisis parmi les applications et logiciels installées sur un mobile multifonctions, une plateforme web et un système d'information de l'organisation.

5. Système de traitement d'information selon la revendication **4**, dans lequel les instruments de mesure (121) des grandeurs caractéristiques du capital humain de cette organisation sont choisis parmi des objets connectés au mobile multifonctions et/ou à une plateforme web et/ou à un système d'information de l'organisation.

6. Système de traitement d'information selon l'une quelconque des revendications **1** à **5**, dans lequel l'évaluation du capital santé d'un membre d'une organisation donne lieu à des recommandations adressées à ce membre et/ou à cette organisation.

7. Système de traitement d'information selon la revendication **6**, dans lequel le capital santé du membre de l'organisation est ré-évalué après la mise en œuvre des recommandations.

8. Système de traitement d'information selon l'une quelconque des revendications **1** à **7**, dans lequel le calcul du risque du capital santé du membre de l'organisation est effectué avec des dispositifs spécifiques à une catégorie de risque dont les indications sont réunies sur un tableau de bord.

9. Système de traitement d'information selon l'une quelconque des revendications **1** à **8**, dans lequel l'évaluation du capital humain de l'organisation donne lieu à des recommandations adressées à un membre de l'organisation et/ou à l'organisation.

10. Système de traitement d'information selon la revendication **9**, dans lequel le capital humain de l'organisation est ré-évalué après la mise en œuvre des recommandations.

11. Système de traitement d'information selon l'une quelconque des revendications **1** à **10** dans lequel le calcul du risque du capital humain de l'organisation est effectué avec des dispositifs spécifiques à une catégorie de risque dont les indications sont réunies sur un tableau de bord.

12. Système de traitement d'information selon l'une quelconque des revendications de **1** à **8** dans lequel l'unité de génération (150) génère des informations pour mettre en place des actions de prévention des risques et/ou de protection du capital santé des membres de l'organisation choisies parmi leurs activités physiques et mentales, l'hygiène de leur milieu de vie et leur alimentation.

13. Système de traitement d'information selon l'une quelconque des revendications de **1** à **12** dans lequel l'unité de génération (150) génère des informations pour mettre en place des actions de prévention des risques et/ou de protection du capital humain de l'organisation choisies parmi les actions de prévention des risques et/ou de protection du capital santé de ses membres, de sa qualité de vie au travail, de ses flux de présence au travail et de sa responsabilité sociétale.

14. Méthode de traitement d'information comprenant :
• L'acquisition d'informations définissant le capital santé des membres d'une l'organisation ;
• L'acquisition d'informations définissant le capital humain de cette organisation ;
• Le stockage desdites informations dans des moyens de stockage ;
• Le calcul d'un risque pour le capital humain de l'organisation et/ou d'un risque pour le capital santé de ses membres ; et
• La génération d'informations pour mettre en place des actions de prévention des risques et/ou des actions de protection
o du capital humain de l'organisation ; et/ou
o du capital santé des membres de l'organisation.
